# EUROPÄISCHE PATENTANMELDUNG

(11) **EP 1 393 854 A1**
(43) Veröffentlichungstag der Anmeldung: **03.03.2004**
(21) Anmeldenummer: 03102621.4
(22) Anmeldetag: 21.08.2003
(51) Int. Cl.: B23Q 17/00, B23Q 17/20, B23Q 17/22, G01B 13/02

(54) **Pneumatische Auflagenkontrolleinrichtung mit einem Differenzdrucksensor**

(30) Priorität: 26.08.2002 DE 10239079
(71) Anmelder: Rexroth Mecman GmbH, 30453 Hannover (DE)
(72) Erfinder: Dalle, Andreas, 31848, Bad Münder (DE); Starke, Dirk, 30167, Hannover (DE); Fortmann, Norbert, 30163, Hannover (DE)
(74) Vertreter: Kietzmann, Lutz

(57) **Zusammenfassung**

Pneumatische Auflagenkontrolleinrichtung zur Überprüfung der relativen Positio nierung eines Werkstückes (3) bezüglich einer Anlagefläche (1) durch Bestimmung des Gegendruckes einer aus der Anlagefläche (1) im Bereich des Werkstücks (3) austretenden und das Werkstück (3) im Wesentlichen senkrecht mit Druckluft anstrahlenden Messdüse (2),
wobei in einen zur Messdüse (2) führenden Messkanal (4) eine Drossel (5) angeordnet ist, zu welcher ein den Druckabfall über die Drossel (5) ermittelnder Differenzdrucksensor (6) parallelgeschaltet ist, dessen Messwert die Positionierung des Werkstücks (3) bezüglich einer Anlagefläche (1) angibt.

## Beschreibung

Die vorliegende Erfindung betrifft eine pneumatische Auflagenkontrolleinrichtung zur Überprüfung der relativen Positionierung eines Werkstückes bezüglich einer Anlagefläche durch Bestimmung des Gegendrucks einer aus der Anlagefläche im Bereich des Werkstücks austretenden und das Werkstück im Wesentlichen senkrecht mit Druckluft anstrahlenden Messdüse.

Eine solche Auflagenkontrolleinrichtung kommt gewöhnlich in Verbindung mit einer Werkstückhaltevorrichtung einer Werkzeugmaschine zum Einsatz. Um das Werkstück relativ zum Werkzeug genau zu positionieren - beispielsweise bei einer Fräsmaschine - kommt das Werkstück auf dem Maschinentisch an mindestens einer Anlagefläche der Werkstückhaltevorrichtung zur Anlage. Die Auflagenkontrolleinrichtung dient hierbei der Beurteilung, ob das Werkstück an der mindestens einen korrespondierenden Anlagefläche der Werkstückhaltevorrichtung korrekt anliegt oder nicht. Insbesondere in der Serienfertigung wird durch diese Art von Auflagenkontrolle ein genaues Bearbeiten jedes Werkstücks sicher gestellt.

Es ist allgemein bekannt, eine pneumatische Auflagenkontrolleinrichtung mit einer aus der Anlagefläche der Werkstückhaltevorrichtung heraustretenden Messdüse auszubilden, durch die Druckluft strömt. Die Druckluft strahlt die Oberfläche des sich der Anlagefläche nähernden Werkstücks an und ein hierbei hinter der Messdüse aufgrund der Druckluftströmung entstehender Gegendruck wird mittels eines Absolutdrucksensors festgestellt, der in Reihe mit der anstrahlenden Messdüse innerhalb des druckluftzuführenden Messkanals angeordnet ist. Der von dem Absolutdrucksensor ermittelte Gegendruck steht mit der Entfernung zwischen dem Werkstück und der Messdüse in etwa in einer proportionalen Beziehung. Hieraus ist feststellbar, ob das Werkstück korrekt bezüglich der Anlagefläche positioniert ist, da der Gegendruck umso mehr ansteigt, je mehr sich das Werkstück der Anlagefläche nähert. Es kann auf dieser Grundlage ein Grenzspalt zwischen der Anlagefläche und dem Werkstück definiert werden, der einer korrekten Positionierung entspricht, wobei der im Verhältnis hierzu stehende Grenzdruck das Erreichen des Grenzspalts anzeigt.

Ein Problem bei dieser herkömmlichen Lösung für eine pneumatische Auflagenkontrolle besteht jedoch darin, dass die Qualität des Messergebnisses bei einem schwankenden Speisedruck nicht sichergestellt werden kann. Wenn der Speisedruck der pne umatischen Auflagenkontrolleinrichtung schwankt, so schwankt im Verhältnis hierzu auch das Messergebnis, was dazu führt, dass es unmöglich wird, die relative Positionierung des Werkstückes bezüglich der Anlagefläche korrekt festzustellen.

Aus der DE 43 44 264 A1 geht eine pneumatische Auflagenkontrolleinrichtung hervor, die dieses Problem versucht dadurch zu lösen, dass die das Werkstück anstrahlende Messdüse als eine erste Strömungsöffnung ausgebildet ist, die mit einer mit dem Umgebungsdruck in Verbindung stehende zweite Strömungsöffnung als Referenzöffnung korrespondiert, wobei beide Strömungsöffnungen mit einer Art Brückenschaltung - wie diese auch aus der Elektrotechnik bekannt ist - zusammenwirkt. In diese Brückenschaltung ist ein Drucksensor parallel geschaltet, dessen Messwert ein Maß für den Abstand zwischen dem Werkstück und der Messdüse darstellt. Diese spezielle pneumatische Schaltungsanordnung gewährleistet trotz schwankendem Speisedruck Messergebnisse hoher Güte.

Ein Nachteil dieser Lösung besteht jedoch darin, dass durch die erforderliche zweite Strömungsöffnung als Referenzöffnung ständig Druckluft an die Atmosphäre abströmt. Neben einer entsprechenden Geräuschbelästigung bewirkt das ständige Abströmen ungenutzter Druckluft auch erhebliche Betriebskosten, da Energie ungenutzt an die Atmosphäre abgegeben wird. Gegenüber der eingangs beschriebenen bekannten Lösung ist der Druckluftverbrauch hier doppelt so hoch.

Es ist die Aufgabe der vorliegenden Erfindung, eine pneumatische Auflagenkontrolleinrichtung zur Überprüfung der relativen Positionierung eines Werkstücks bezüglich einer Anlagefläche zu schaffen, die ein genaues Messergebnis bei gleichzeitig minimalem Druckluftverbrauch ermöglicht.

Die Aufgabe wird ausgehend von einer pneumatischen Auflagenkontrolleinrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass in den zur Messdüse führenden Messkanal eine Drossel angeordnet ist, zu welcher ein den Druckabfall über die Drossel ermittelnder Differenzdrucksensor parallel geschaltet ist, dessen Messwert die Positionierung des Werkstücks bezüglich der Anlagefläche angibt.

Der Vorteil der erfindungsgemäßen Lösung liegt insbesondere darin, dass aufgrund der speziellen Differenzdruckmessung ein einziger Messkanal, der zwischen einem Speisedruckanschluss und der Messdüse führt, ausreicht, um die Auflagenkontrolle durchzuführen. Wird weiterhin berücksichtigt, dass Differenzdrucksensoren im Gegensatz zu Absolutdrucksensoren preiswerter sind, so lässt sich die erfindungsgemäße pneumatische Auflagenkontrolleinrichtung mit wenigen Bauteilen auf einfache Weise effektiv realisieren. Die Messqualität erreicht aufgrund des erfindungsgemäßen Messprinzips des über die Drossel abfallenden Drucks eine Güte, die an die aus dem Stand der Technik bekannte pneumatische Brückenschaltung herankommt. Demgegenüber entfällt bei der erfindungsgemäßen Lösung auch die zusätzliche Referenzöffnung, so dass der Druckluftverbrauch nur halb so groß ist, was die Betriebskosten minimal hält.

Gemäß einer die Erfindung verbessernden Maßnahme ist die Drossel nach Art einer einstellbaren Drossel ausgebildet, um den vordefinierten Grenzdruck entsprechend dem gewünschten Grenzspalt zwischen dem Werkstück und der Anlagefläche hierüber manuell anzupassen. Somit ist die Auflagenkontrolleinrichtung auf unterschiedliche Abstandsmaße zwischen der Anlagefläche und des Werkstücks flexibel einstellbar, ohne dass ein Wechsel der Drossel durchgeführt werden muss.

Eine andere, die Erfindung verbessernde Maßnahme besteht darin, dass zur Erhöhung der Messempfindlichkeit in Ergänzung der vorgenannten Dro ssel eine weitere Drossel vorgesehen ist, die parallel hierzu geschaltet ist. Diese Drossel ist vorzugsweise als Festdrossel ausgebildet. Hierüber wird eine Empfindlichkeitssteigerung der Messdüse erreicht. Weiterhin kann für die parallel geschaltete einstellbare Drossel eine kleinere Bauart ausgewählt werden, die preiswerter ist, weil sich die effektiven Strömungsquerschnitte beider Drosseln addieren.

Vorzugsweise ist der Differenzdrucksensor nach Art eines Schwellwertschalters ausgebildet, der bei Erreichen eines vordefinierten Grenzdifferenzdrucks über den elektrischen Ausgang ein elektrisches Signal ausgibt. Das elektrische Signal gibt die korrekte Anlage des Werkstücks an der Anlagefläche an und kann in geeigneter Weise zur Anzeige gebracht werden, beispielsweise mittels einfacher Signallampe. Die Signallampe leuchtet auf, wenn das Werkstück korrekt gegenüber der Anlagefläche positioniert ist. Daneben ist es auch möglich, das elektrische Signal in einer elektronischen Steuereinheit im Rahmen der Maschinensteuerung zu verarbeiten.

Gemäß einer weiteren, die Erfindung verbessernden Maßnahme ist parallel neben dem Messkanal ein kurz vor der Messdüse in diesen einmündender Freiblaskanal zum Entfernen von Schmutz und Spänen vom Bereich der Anlagefläche vorgesehen. Das Freiblasen wird nach dem Entfernen des Werkstücks nach dessen Bearbeitung durchgeführt. Hierfür kann ebenfalls die Messdüse genutzt werden, so dass eine weitere Düse zu diesem Zwecke entfällt. Um eine Beeinflussung der Messung durch das Freiblasen zu verhindern, kann der Messkanal während des Freiblasens gesperrt werden. Dies wird in einfacher Weise durch ein in den Messkanal eingeschaltetes Rückschlagventil mit Sperrrichtung entgegen der Strömungsrichtung realisiert. Ebenso kann in den Freiblaskanal ein Rückschlagventil mit Sperrrichtung entgegen der Strömungsrichtung eingeschalten werden, um den Freiblaskanal während der Messung zu sperren. Somit wird in einfacher Weise eine gegenseitige ungünstige Beeinflussung zwischen Freiblasen und Messen verhindert.

Die Speisedruckversorgung der pneumatischen Auflagenkontrolleinrichtung erfolgt vorzugsweise über einen vorgeschalteten Druckregler, der die in den Messkanal zum Messen eingespeiste Druckluft vorglättet.

Vorteilhafterweise erfolgt die Unterbringung der pneumatischen Auflagekontrolleinrichtung direkt in einem Gehäuse, das auf einer Grundplatte einer pneumatischen Ventileinheit montierbar ist. Somit weist die derartig ausgebildete pneumatische Auflagenkontrolleinrichtung solche Abmessungen auf, die einem Mehrwegeventil für die Ventileinheit entsprechen. Somit ist die pneumatische Auflagenkontrolleinrichtung platzsparend und mit wenig Aufwand montierbar.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine pneumatische Schaltungsanordnung einer pneumatischen Auflagenkontrolleinrichtung mit Ansteuermitteln, und
- Fig. 2: eine Draufsicht auf eine pneumatische Ventileinheit, auf die eine pneumatische Auflagenkontrolleinrichtung nach Fig. 1 neben Mehrwegeventilen angeordnet ist.

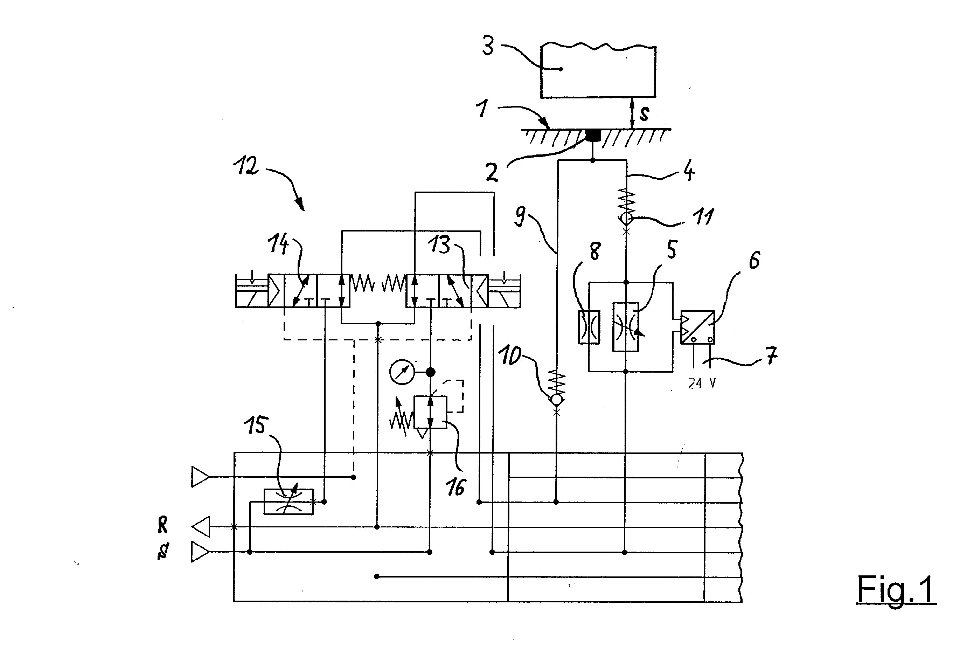

Gemäß Fig. 1 ist die pneumatische Auflagenkontrolleinrichtung an eine hier nur schematisch angedeutete Anlagefläche 1 angeordnet. Eine Messdüse 2 bildet an der Anlagefläche 1 eine Austrittsöffnung. Die hier austretende Druckluft strömt gegen ein gegenüberliegend der Anlagefläche 1 positioniertes Werkstück 3. Die pneumatische Auflagenkontrolleinrichtung dient zur Überprüfung der relativen Positionierung des Werkstückes 3 bezüglich der Anlagefläche 1, also der Kontrolle des dazwischenliegenden Spaltes S. In einen zur Messdüse 2 führenden Messkanal 4 ist eine verstellbare Drossel 5 angeordnet. Zu der Drossel 5 ist ein den Druckabfall über die Drossel 5 ermittelnder Differenzdrucksensor 6 parallel geschaltet. Der Differenzdrucksensor 6 gibt über einen elektrischen Ausgang 7 ein elektrisches Signal aus, welches die korrekte Anlage des Werkstückes 3 an der Anlagefläche 1 signalisiert. Das elektrische Signal ist hier ein binäres Signal. Der Differenzdrucksensor 6 ist korrespondierend hierzu nach Art eines Schwellwertschalters ausgebildet, der bei Erreichen eines vordefinierten Grenzdifferenzdrucks das binäre elektrische Signal über den elektrischen Ausgang 7 ausgibt. Zur Erhöhung der Messempfindlichkeit ist eine weitere, nach Art einer Festdrossel ausgebildete Drossel 8 vorgesehen, welche parallel zur einstellbaren Drossel 5 geschaltet ist.

Parallel neben dem Messkanal 4 ist ein kurz vor der Messdüse 2 in diesen einmündender Freiblaskanal 9 vorgesehen. Der Freiblaskanal 9 dient zum Entfernen von Schmutz und Spänen vom Bereich der Anlagefläche 1. Es wird entweder der Freiblaskanal 9 oder der Messkanal 4 mit Druckluft beaufschlagt. Eine gleichzeitige Druckluftbeaufschlagung findet nicht statt. Um den Freiblaskanal 9 während einer Messung zu sperren, ist in diesem ein Rückschlagventil 10 mit Sperrrichtung entgegen der Strömungsrichtung eingeschalten. In entsprechender Weise ist in dem Messkanal 4 ebenfalls ein Rückschlagventil 11 mit Sperrrichtung entgegen der Strömungsrichtung eingeschalten, um den Messkanal 4 während des Freiblasens zu sperren. Der Messkanal 4 sowie der Freiblaskanal 9 werden über eine vorgeschaltete Ventilanordnung 12 mit Druckluft versorgt. Als Ventilanordnung 12 kommt ein 2 x 3/2-Mehrwegeventil zur Anwendung. Bei Betätigung des einen Ventils 13 wird das Freiblasen ausgelöst, wobei durch Betätigung des anderen Ventils 14 der Ventilanordnung 12 das Messen durchgeführt wird. Zur Einstellung des Freiblasdrucks ist eine vorgeschaltete, einstellbare Drossel 15 vorgesehen. Ein dem Messkanal 4 vorgeschalteter Druckregler 16 glättet die eingespeiste Druckluft, um die Messgüte zu verbessern.

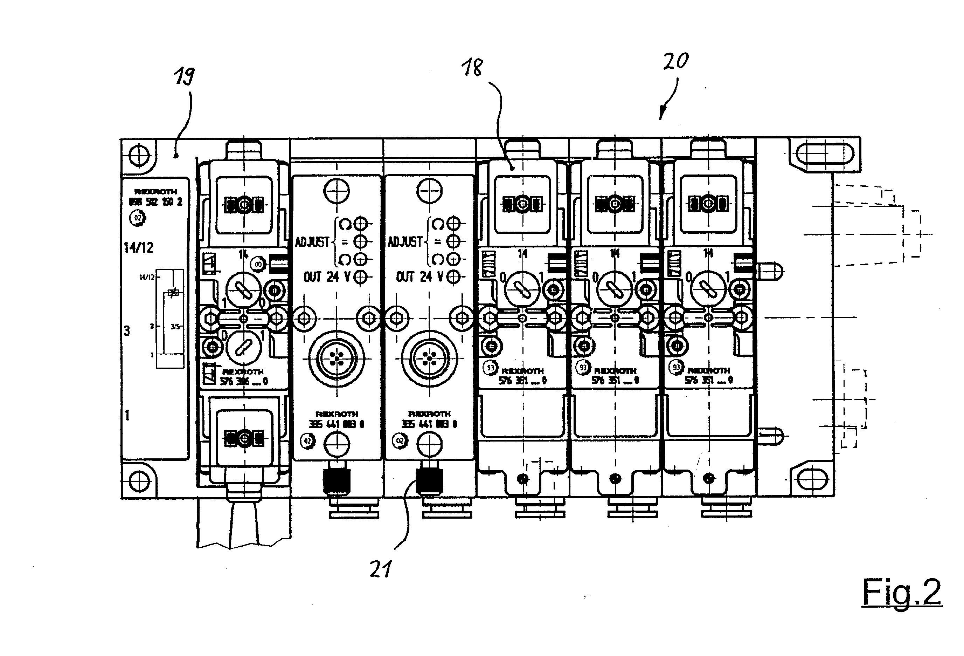

Gemäß Fig. 2 ist die vorstehend beschriebene pneumatische Auflagenkontrolleinrichtung in einem Gehäuse 17 untergebracht. Das Gehäuse 17 ist gemeinsam mit herkömmlichen Mehrwegeventilen 18 auf einer Grundplatte 19 einer pneumatischen Ventileinheit 20 montiert. Ein aus dem Gehäuse 17 herausragender Drehknopf 21 dient der Einstellung der - hier nicht erkennbaren - integrierten Drossel 5, so dass hierüber der Grenzspalt zwischen dem Werkstück 3 und der Anlagefläche 1 manuell einstellbar ist.

### Bezugszeichenliste

- **1**: Anlagefläche
- **2**: Messdüse
- **3**: Werkstück
- **4**: Messkanal
- **5**: Drossel, einstellbar
- **6**: Differenzdrucksensor
- **7**: Ausgang
- **8**: Drossel
- **9**: Freiblaskanal
- **10**: Rückschlagventil
- **11**: Rückschlagventil
- **12**: Ventilanordnung
- **13**: Ventil
- **14**: Ventil
- **15**: Drossel, einstellbar
- **16**: Druckregler
- **17**: Gehäuse
- **18**: Mehrwegeventil
- **19**: Grundplatte
- **20**: Ventileinheit
- **21**: Drehknopf

## Patentansprüche

1. Pneumatische Auflagenkontrolleinrichtung zur Überprüfung der relativen Positionierung eines Werkstückes (3) bezüglich einer Anlagefläche (1) durch Bestimmung des Gegendruckes einer aus der Anlagefläche (1) im Bereich des Werkstücks (3) austretenden und das Werkstück (3) im Wesentlichen senkrecht mit Druckluft anstrahlenden Messdüse (2), **dadurch gekennzeichnet, dass** in einen zur Messdüse (2) führenden Messkanal (4) eine Drossel (5) angeordnet ist, zu welcher ein den Druckabfall über die Drossel (5) ermittelnder Differenzdrucksensor (6) parallelgeschaltet ist, dessen Messwert die Positionierung des Werkstücks (3) bezüglich einer Anlagefläche (1) angibt.

2. Pneumatische Auflagenkontrolleinrichtung nach Anspruch 1, **dadurch gekennzeichnet, dass** die Drossel (5) nach Art einer einstellbaren Drossel ausgebildet ist, um den vordefinierten Grenzdruck entsprechend dem gewünschten Grenzspalt zwischen dem Werkstück (3) und der Anlagefläche (1) hierüber manuell einzustellen.

3. Pneumatische Auflagenkontrolleinrichtung nach Anspruch 1, **dadurch gekennzeichnet, dass** zur Erhöhung der Messempfindlichkeit eine weitere Drossel (8) vorgesehen ist, die parallel zur einstellbaren Drossel (5) geschaltet ist.

4. Pneumatische Auflagenkontrolleinrichtung nach Anspruch 3, **dadurch gekennzeichnet, dass** die weitere Drossel (8) als Festdrossel ausgebildet ist.

5. Pneumatische Auflagenkontrolleinrichtung nach Anspruch 1, **dadurch gekennzeichnet, dass** der Differenzdrucksensor (6) nach Art eines Schwellwertschalters ausgebildet ist, der bei Erreichen eines vordefinierten Grenzdifferenzdrucks über den elektrischen Ausgang (7) ein elektrisches Signal ausgibt, welches die korrekte Anlage des Werkstücks (3) an der Anlagefläche (1) signalisiert.

6. Pneumatische Auflagenkontrolleinrichtung nach Anspruch 1, **dadurch gekennzeichnet, dass** parallel neben dem Messkanal (4) ein kurz vor der Messdüse (2) in diesen einmündender Freiblaskanal (9) zum Entfernem von Schmutz und Spänen vom Bereich der Anlagefläche (1) vorgesehen ist.

7. Pneumatische Auflagenkontrolleinrichtung nach Anspruch 6, **dadurch gekennzeichnet, dass** in den Freiblaskanal (9) ein Rückschlagventil (10) mit Sperrichtung entgegen der Strömungsrichtung eingeschalten ist, um den Freiblaskanal (9) während einer Messung zu sperren.

8. Pneumatische Auflagenkontrolleinrichtung nach Anspruch 1, ***dadurch gekennzeichnet,* dass** in den Messkanal (4) ein Rückschlagventil (11) mit Sperrichtung entgegen der Strömungsrichtung eingeschalten ist, um den Messkanal (4) während eines Freiblasens zu sperren.

9. Pneumatische Auflagenkontrolleinrichtung nach Anspruch 1, **dadurch gekennzeichnet, dass** ein dem Messkanal (4) vorgeschalteter Druckregler (10), die in diesen zum Messen eingespeiste Druckluft im Wesentlichen konstant hält.

10. Pneumatische Auflagenkontrolleinrichtung nach einem der vorstehenden Ansprüche, **dadurch gekennzeichnet, dass** die Unterbringung in einem Gehäuse (17) erfolgt, das auf einer Grundplatte (19) einer pneumatischen Ventileinheit (20) montierbar ist.
